# EUROPEAN PATENT APPLICATION

(11) **EP 4 822 226 A1**
(43) Date of publication of application: **14.10.2026**
(21) Application number: 24898965.9
(22) Date of filing: 05.08.2024
(51) Int. Cl.: F16K 31/04, H02P 8/34

(54) **ELECTRIC VALVE CONTROL DEVICE, ELECTRIC VALVE DEVICE, AND ELECTRIC VALVE STATE DETERMINATION METHOD**

(30) Priority: 04.12.2023 JP 2023204626
(71) Applicant: Fujikoki Corporation, Tokyo 158-0082 (JP)
(72) Inventor: ISHIZUKA, Yusuke, Tokyo 158-0082 (JP); HAGIMOTO, Hiroshi, Tokyo 158-0082 (JP)
(74) Representative: Ter Meer und Partner mbB
(86) International application number: PCT/JP2024/027901
(87) International publication number: WO 2025/120915

(57) **Abstract**

[Problem] To provide a motor-operated valve control device, a motor-operated valve device, and a method for determining a state of a motor-operated valve, each of which is capable of determining whether rotation of a rotor of a stepping motor is restricted even when driving currents are supplied to coils of the stepping motor.

[Solution] A computer 80 of a motor-operated valve control device is configured to determine whether rotation of a rotor 41 of a stepping motor 66 is restricted, by using information regarding a rising period during which a driving current flowing through an A-phase coil 61c of the stepping motor 66 changes from a first current value to a second current value.

## Description

### Technical Field

The present invention relates to a motor-operated valve control device, a motor-operated valve device including a motor-operated valve control device, and a method for determining a state of a motor-operated valve.

### Background Art

Patent Literature 1 describes an example of a motor-operated valve according to the related art. The motor-operated valve includes a valve body, a valve member, a stepping motor, and a stopper mechanism. The stepping motor includes a rotor and a stator. The rotor rotates when driving currents are supplied to coils (an A-phase coil and a B-phase coil) of the stator. The valve member moves along with the rotation of the rotor. The stopper mechanism restricts the rotation of the rotor in a first direction when the rotor is at a reference position.

The motor-operated valve is controlled by a motor-operated valve control device. In an initialization operation, the motor-operated valve control device supplies the driving currents to the coils to rotate the rotor in the first direction and to position the rotor at the reference position.

Specifically, the motor-operated valve control device obtains voltages generated in the coils by the rotation of the rotor (voltages electromagnetically induced in the coils), and determines, based on the voltages, whether the rotation of the rotor in the first direction is restricted. When the motor-operated valve control device determines that the rotation of the rotor in the first direction is restricted, the motor-operated valve control device stops the rotation of the rotor.

### Citation List

### Patent Literature

Patent Literature 1: Japanese Patent No. 7254400

### Summary of Invention

### Technical Problem

The motor-operated valve control device controls the stepping motor in a 1-2-phase excitation mode. The 1-2-phase excitation mode includes a 2-phase excitation period and a 1-phase excitation period. In the 2-phase excitation period, driving currents are supplied to both the A-phase coil and the B-phase coil. In the 1-phase excitation period, a driving current is supplied only to one of the A-phase coil and the B-phase coil.

In the 2-phase excitation period, a voltage generated in the A-phase coil includes a voltage component resulting from the driving current and a voltage component generated by the rotation of the rotor, and a voltage generated in the B-phase coil also includes a voltage component resulting from the driving current and a voltage component generated by the rotation of the rotor. Therefore, it is difficult for the motor-operated valve control device to obtain the voltage generated in the coils by the rotation of the rotor alone.

In the 1-phase excitation period, when the driving current is supplied only to the A-phase coil, a voltage generated in the B-phase coil includes only a voltage component generated by the rotation of the rotor, and when the driving current is supplied only to the B-phase coil, a voltage generated in the A-phase coil includes only a voltage component generated by the rotation of the rotor. The motor-operated valve control device can obtain, as the voltage generated by the rotation of the rotor, the voltage generated in one of the A-phase coil and the B-phase coil that is not supplied with the driving current.

Consequently, when the driving current is supplied only to one of the A-phase coil and the B-phase coil, the motor-operated valve control device determines, based on the voltage generated in the other coil that is not supplied with the driving current, whether the rotation of the rotor in the first direction is restricted.

However, in a configuration in which the motor-operated valve control device controls the stepping motor in the 2-phase excitation mode, driving currents are always supplied to both the A-phase coil and the B-phase coil. Therefore, the motor-operated valve control device cannot obtain voltages generated in the coils by the rotation of the rotor alone, and thus it is difficult to determine whether the rotation of the rotor in the first direction is restricted.

Accordingly, an object of the present invention is to provide a motor-operated valve control device, a motor-operated valve device, and a method for determining a state of a motor-operated valve, each of which is capable of determining whether rotation of a rotor is restricted even when driving currents are supplied to coils of a stator.

### Solution to Problem

The inventors supplied driving currents to stator coils of a plurality of motor-operated valves, measured the driving currents flowing through the coils, and conducted intensive studies on the measurement results. As a result, the inventors found a difference between a waveform of a transition period during which the driving current changes from a first current value to a second current value in the motor-operated valve in which rotation of the rotor is restricted, and a waveform of the transition period in the motor-operated valve in which rotation of the rotor is not restricted. Based on these findings, the present invention was conceived.

To achieve the object above, a motor-operated valve control device according to an aspect of the present invention is provided for controlling a motor-operated valve. The motor-operated valve includes a valve body that has a valve port, a rotor, a stator that includes a coil to which a driving current is supplied to rotate the rotor, and a valve member that moves relative to the valve port when the rotor rotates. The motor-operated valve control device includes a processor, and the processor is configured to determine whether rotation of the rotor is restricted, by using information regarding a transition period during which the driving current flowing through the coil changes from a first current value to a second current value.

In the present invention, preferably, the information regarding the transition period is a time duration from a starting point to an ending point of the transition period.

In the present invention, preferably, the information regarding the transition period is an average value of time durations, each being the time duration from the starting point to the ending point of the transition period.

In the present invention, preferably, the information regarding the transition period is a variation amount of time durations, each being the time duration from the starting point to the ending point of the transition period.

In the present invention, preferably, the motor-operated valve includes a stopper mechanism that restricts rotation of the rotor in a first direction when the rotor is at a reference position, and when the variation amount exceeds a first determination threshold while the rotor is rotating in the first direction, the processor is configured to determine that the rotation of the rotor in the first direction is restricted by the stopper mechanism.

In the present invention, preferably, when the variation amount is less than a second determination threshold that is less than the first determination threshold, the processor is configured to determine that rotation of the rotor in both the first direction and a second direction is restricted.

In the present invention, preferably, the driving current is controlled by a pulse width modulation scheme, and the information regarding the transition period is a duty cycle of the pulse width modulation scheme during a determination period including the transition period.

In the present invention, preferably, the information regarding the transition period is a waveform of the driving current flowing through the coil during a determination period including the transition period.

To achieve the object above, a motor-operated valve device according to another aspect of the present invention includes the motor-operated valve and the motor-operated valve control device.

To achieve the object above, a method according to another aspect of the present invention is provided for determining a state of a motor-operated valve. The motor-operated valve includes a valve body that has a valve port, a rotor, a stator that includes a coil to which a driving current is supplied to rotate the rotor, and a valve member that moves relative to the valve port when the rotor rotates. The method includes determining whether rotation of the rotor is restricted, by using information regarding a transition period during which the driving current flowing through the coil changes from a first current value to a second current value.

### Advantageous Effects of Invention

According to the present invention, whether the rotation of the rotor is restricted is determined by using the information regarding the transition period during which the driving current flowing through the coil of the stator changes from the first current value to the second current value. With this configuration, it is possible to determine whether the rotation of the rotor is restricted even when the driving currents are supplied to the coils of the stator.

### Brief Description of Drawings

[Fig. 1] Fig. 1 is a block diagram of an air conditioner including a motor-operated valve device.
[Fig. 2] Fig. 2 is a sectional view of the motor-operated valve device.
[Fig. 3] Fig. 3 is a plan view of a valve stem holder, a stopper member, a rotor, and a stator of the motor-operated valve device.
[Fig. 4] Fig. 4 is a diagram schematically illustrating a positional relationship between magnetic poles of the rotor and pole teeth of the stator (when pulse P[1] is input).
[Fig. 5] Fig. 5 is a diagram schematically illustrating the positional relationship between the magnetic poles of the rotor and the pole teeth of the stator (when pulse P[2] is input).
[Fig. 6] Fig. 6 is a diagram schematically illustrating the positional relationship between the magnetic poles of the rotor and the pole teeth of the stator (when pulse P[3] is input).
[Fig. 7] Fig. 7 is a diagram schematically illustrating the positional relationship between the magnetic poles of the rotor and the pole teeth of the stator (when pulse P[4] is input).
[Fig. 8] Fig. 8 is a diagram schematically illustrating a computer and a motor driver that are included in a motor-operated valve control device, and a stepping motor of the motor-operated valve device.
[Fig. 9] Fig. 9 is a diagram illustrating an example of a relationship between pulses input to the stepping motor and a step signal and a direction signal input to the motor driver.
[Fig. 10] Fig. 10 is a diagram illustrating an example of a correspondence between pulses and A-phase and B-phase current target values.
[Fig. 11] Fig. 11 is a diagram schematically illustrating examples of waveforms of A-phase and B-phase currents.
[Fig. 12] Fig. 12 is a diagram illustrating examples of waveforms of driving currents flowing through coils of the stator.
[Fig. 13] Fig. 13 is a diagram schematically illustrating a waveform of the driving current flowing through the coil of the stator.
[Fig. 14] Fig. 14 is a diagram illustrating an example of a relationship between rise times of the waveform of the driving current and states of the motor-operated valve.
[Fig. 15] Fig. 15 is a diagram illustrating another example of the relationship between rise times of the waveform of the driving current and states of the motor-operated valve.
[Fig. 16] Fig. 16 is a diagram schematically illustrating an example of a relationship between the waveform of the driving current and a duty cycle (in a state where the rotation of the rotor is permitted).
[Fig. 17] Fig. 17 is a diagram schematically illustrating another example of the relationship between the waveform of the driving current and the duty cycle (in a state where the rotation of the rotor is restricted).
[Fig. 18] Fig. 18 is a diagram schematically illustrating waveforms of two driving currents.
[Fig. 19] Fig. 19 is a flowchart illustrating a first operation example of the motor-operated valve control device.
[Fig. 20] Fig. 20 is a flowchart illustrating a second operation example of the motor-operated valve control device.
[Fig. 21] Fig. 21 is a flowchart illustrating a third operation example of the motor-operated valve control device.
[Fig. 22] Fig. 22 is a flowchart illustrating a fourth operation example of the motor-operated valve control device.
[Fig. 23] Fig. 23 is a flowchart illustrating a fifth operation example of the motor-operated valve control device.
[Fig. 24] Fig. 24 is a diagram illustrating an example of a data table of a reference waveform of the driving current.

### Description of Embodiments

A motor-operated valve device according to an embodiment of the present invention is described below.

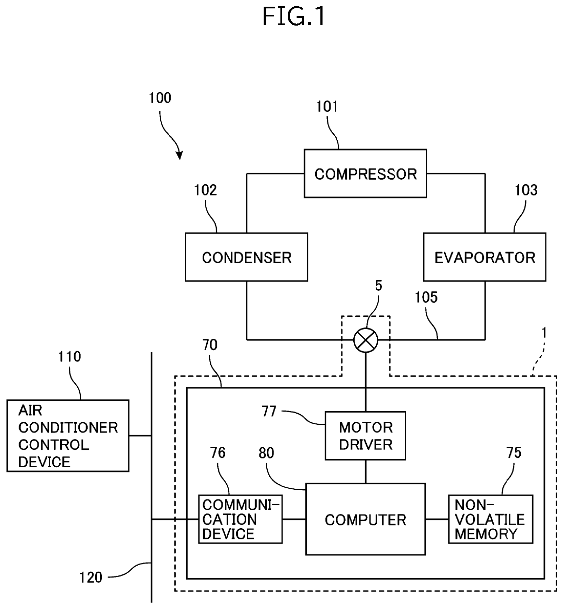

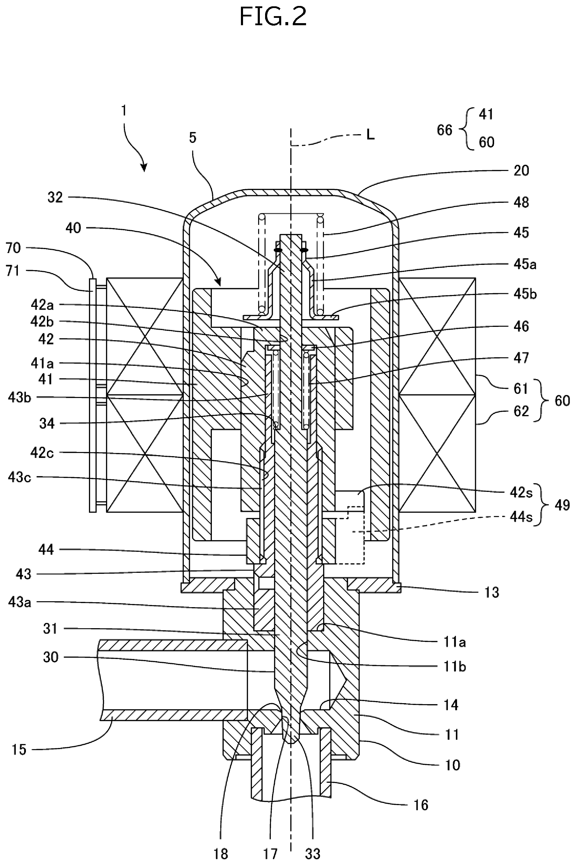

A motor-operated valve device 1 according to the embodiment is, for example, incorporated in a refrigeration cycle system of an air conditioner and is used as a flow control valve for controlling the flow rate of refrigerant. The motor-operated valve device 1 includes a motor-operated valve 5 and a motor-operated valve control device 70. Fig. 1 illustrates a block diagram of an air conditioner 100 including the motor-operated valve device 1. Fig. 2 illustrates a sectional view of the motor-operated valve device 1.

The air conditioner 100 includes a compressor 101, a condenser 102, the motor-operated valve device 1 (the motor-operated valve 5), and an evaporator 103, which are connected in this order via a pipe 105. The motor-operated valve device 1 functions as an expansion valve. The air conditioner 100 includes an air conditioner control device 110. The air conditioner control device 110 is connected to and can communicate with the motor-operated valve device 1 (the motor-operated valve control device 70). The air conditioner control device 110 uses the motor-operated valve device 1 to control the flow rate of refrigerant flowing through the pipe 105.

The motor-operated valve 5 includes a valve body 10, a can 20, a valve member 30, a driving mechanism 40, and a stator 60.

The valve body 10 includes a body member 11 and a connection member 13. The body member 11 has a circular columnar shape. The body member 11 has a valve chamber 14 and a valve port 17 connected to the valve chamber 14. A first conduit 15 and a second conduit 16 are joined to the body member 11. The first conduit 15 is connected to the valve chamber 14. The second conduit 16 is connected to the valve port 17. The body member 11 has a valve seat 18 that has a circular annular shape and encloses the valve port 17 in the valve chamber 14. The body member 11 has a fitting hole 11a, which has a circular shape. The fitting hole 11a is provided in the upper end surface of the body member 11. A through hole 11b is provided at the bottom of the fitting hole 11a and communicates with the valve chamber 14. The connection member 13 has a circular annular plate-like shape. The inner peripheral edge of the connection member 13 is joined to the upper end of the body member 11. The body member 11 and the connection member 13 are made of a metal, such as an aluminum alloy, stainless steel, or brass.

The can 20 is made of a metal, such as stainless steel. The can 20 has a circular cylindrical shape. The can 20 is open at the lower end and is closed at the upper end. The lower end of the can 20 is joined to the outer peripheral edge of the connection member 13.

The valve member 30 includes a first stem portion 31, a second stem portion 32, and a plug portion 33. The first stem portion 31 and the second stem portion 32 each have a circular columnar shape. The diameter of the second stem portion 32 is smaller than the diameter of the first stem portion 31. The second stem portion 32 is connected to the upper end of the first stem portion 31 and is coaxial with the first stem portion 31. The valve member 30 has a step portion 34, which is a annular planar surface facing upward. The step portion 34 is provided in the part where the second stem portion 32 is connected to the first stem portion 31. The plug portion 33 has a conical shape with a diameter decreasing from top to bottom. The plug portion 33 is connected to the lower end of the first stem portion 31 and is coaxial with the first stem portion 31. The plug portion 33 is disposed in the valve port 17. A variable throttle passage is formed between the plug portion 33 and the valve port 17. The plug portion 33 faces the valve port 17 and the valve seat 18. The valve port 17 is closed when the plug portion 33 is in contact with the valve seat 18. The valve port 17 is open when the plug portion 33 is separated from the valve seat 18.

The driving mechanism 40 moves the valve member 30 in an up-and-down direction (a direction of an axis L). The movement of the valve member 30 opens and closes the valve port 17. The driving mechanism 40 includes a rotor 41, a valve stem holder 42, a movable stopper 42s, a guide bush 43, a stopper member 44, a fixed stopper 44s, a retaining member 45, a washer 46, a valve closing spring 47, and a return spring 48.

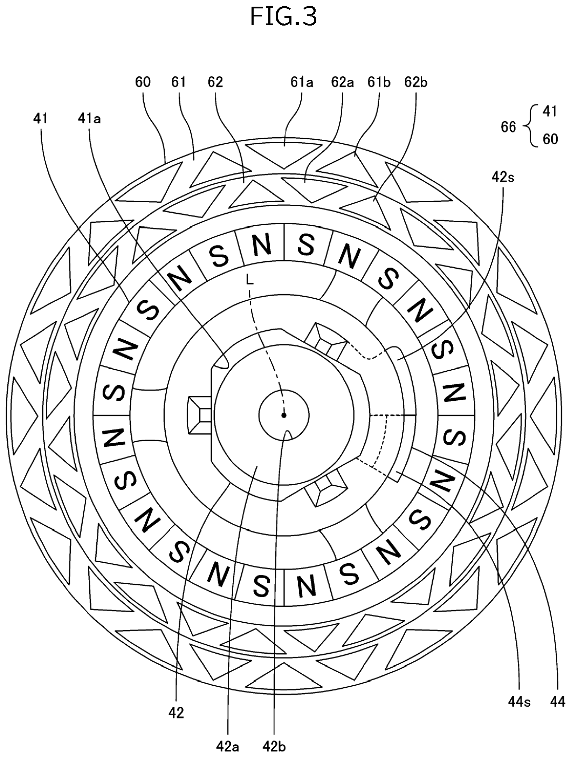

Fig. 3 illustrates a plan view of the rotor 41, the valve stem holder 42, the stopper member 44, and the stator 60. Fig. 3 schematically illustrates magnetic poles of the rotor 41 and the stator 60. In Fig. 3, the radially outward direction of the illustration representing the stator 60 corresponds to the upward direction of the stator 60, and the radially inward direction corresponds to the downward direction.

The rotor 41 has a circular cylindrical shape. The outer diameter of the rotor 41 is slightly smaller than the inner diameter of the can 20. The rotor 41 is disposed inside the can 20. The rotor 41 is rotatable relative to the valve body 10. The rotor 41 has a plurality of north (N) poles and a plurality of south (S) poles. The N poles and the S poles are disposed on the outer circumferential surface of the rotor 41. The N poles and the S poles each extend in the up-and-down direction. The N poles and the S poles are alternately arranged one after another at regular angular intervals in the circumferential direction. The rotor 41 has, for example, twelve N poles and twelve S poles. The angle between the N poles and the S poles adjacent to each other is 15 degrees. The position of the rotor 41 is related to the opening degree of the valve port 17.

The valve stem holder 42 has a circular cylindrical shape. The valve stem holder 42 is open at the lower end. The valve stem holder 42 includes an upper wall portion 42a having a stem hole 42b. The valve stem holder 42 is fitted into a fitting hole 41a of the rotor 41 and rotates together with the rotor 41. The movable stopper 42s is integrally provided on the outer circumferential surface of the valve stem holder 42. The second stem portion 32 of the valve member 30 is disposed in the stem hole 42b and is movable in the up-and-down direction therein. The valve closing spring 47 is disposed between the washer 46 provided on the lower surface of the upper wall portion 42a of the valve stem holder 42 and the step portion 34 of the valve member 30. The valve closing spring 47 is a coil spring and pushes the valve member 30 toward the valve seat 18. An internal thread 42c is provided on the inner circumferential surface of the valve stem holder 42. The movable stopper 42s is fixed relative to the rotor 41.

The guide bush 43 includes a base portion 43a and a support portion 43b. The base portion 43a and the support portion 43b each have a circular cylindrical shape. The base portion 43a is press-fitted into the fitting hole 11a of the body member 11. The support portion 43b is connected to the upper end of the base portion 43a and is coaxial with the base portion 43a. An external thread 43c is provided on the outer circumferential surface of the support portion 43b. The external thread 43c is screwed into the internal thread 42c of the valve stem holder 42. The first stem portion 31 of the valve member 30 is disposed inside the guide bush 43. The guide bush 43 supports the valve member 30 so that the valve member 30 is movable in the direction of the axis L.

The stopper member 44 has a circular cylindrical shape. The stopper member 44 is fixed to the lower end of the support portion 43b of the guide bush 43. The fixed stopper 44s is integrally provided on the outer circumferential surface of the stopper member 44. The fixed stopper 44s is fixed relative to the valve body 10.

The retaining member 45 includes a fixed portion 45a and a flange portion 45b. The fixed portion 45a has a stepped circular cylindrical shape. The second stem portion 32 of the valve member 30 is disposed inside the fixed portion 45a. The fixed portion 45a is joined to the second stem portion 32. The flange portion 45b is connected to the lower end of the fixed portion 45a. The return spring 48 is disposed outside the retaining member 45. The return spring 48 is a coil spring.

The motor-operated valve 5 includes the driving mechanism 40 that uses the rotation of the rotor 41 without speed reduction. The motor-operated valve 5 may include, instead of the driving mechanism 40, a driving mechanism that has a speed reduction mechanism reducing the rotational speed of the rotor 41.

The stator 60 has a circular cylindrical shape. The stator 60 includes an A-phase stack 61 and a B-phase stack 62.

The A-phase stack 61 includes a plurality of claw-pole type pole teeth 61a and 61b on the inner circumference. The tips of the pole teeth 61a point downward, while the tips of the pole teeth 61b point upward. The pole teeth 61a and the pole teeth 61b are alternately arranged one after another at regular angular intervals in the circumferential direction. The A-phase stack 61 has, for example, twelve pole teeth 61a and twelve pole teeth 61b. The angle between the pole teeth 61a and the pole teeth 61b adjacent to each other is 15 degrees. The A-phase stack 61 includes an A-phase coil 61c. When the A-phase coil 61c is energized, the pole teeth 61a and the pole teeth 61b have opposite polarities.

The B-phase stack 62 includes a plurality of claw-pole type pole teeth 62a and 62b on the inner circumference. The tips of the pole teeth 62a point downward, while the tips of the pole teeth 62b point upward. The pole teeth 62a and the pole teeth 62b are alternately arranged one after another at regular angular intervals in the circumferential direction. The B-phase stack 62 has, for example, twelve pole teeth 62a and twelve pole teeth 62b. The angle between the pole teeth 62a and the pole teeth 62b adjacent to each other is 15 degrees. The B-phase stack 62 includes a B-phase coil 62c. When the B-phase coil 62c is energized, the pole teeth 62a and the pole teeth 62b have opposite polarities. The B-phase stack 62 has the same configuration as that of the A-phase stack 61.

The A-phase stack 61 is disposed coaxially on the B-phase stack 62. The B-phase stack 62 is located at a position where the B-phase stack 62 is rotated relative to the A-phase stack 61 about the axis L by 7.5 degrees from the position where the pole teeth 61a and the pole teeth 62a are arranged in the direction of the axis L.

The can 20 is disposed inside the stator 60. The rotor 41 is disposed inside the can 20. The stator 60 and the rotor 41 are members of a stepping motor 66. The stepping motor 66 is connected to the motor-operated valve control device 70.

In the embodiment, the stepping motor 66 is controlled in a 2-phase excitation mode. The rotor 41 is rotated by pulses P (P[1] to P[4]) input to the stepping motor 66. Specifically, the rotor 41 is rotated by driving currents that correspond to the pulses P and are supplied to the stator 60 of the stepping motor 66. In this specification, "inputting the pulses P to the stepping motor 66" is synonymous with "supplying the driving currents corresponding to the pulses P to the stator 60 of the stepping motor 66". The stepping motor 66 may be controlled in a 1-phase excitation mode, a 1-2-phase excitation mode, a W1-2-phase excitation mode, a 2W1-2-phase excitation mode, or a 4W1-2-phase excitation mode.

When the pulses P are cyclically input to the stepping motor 66 in ascending order (in the order from pulse P[1] to pulse P[4]), the rotor 41 rotates in a first direction, which corresponds to clockwise in Fig. 3. When the pulses P are cyclically input to the stepping motor 66 in descending order (in the order from pulse P[4] to pulse P[1]), the rotor 41 rotates in a second direction, which corresponds to counterclockwise in Fig. 3.

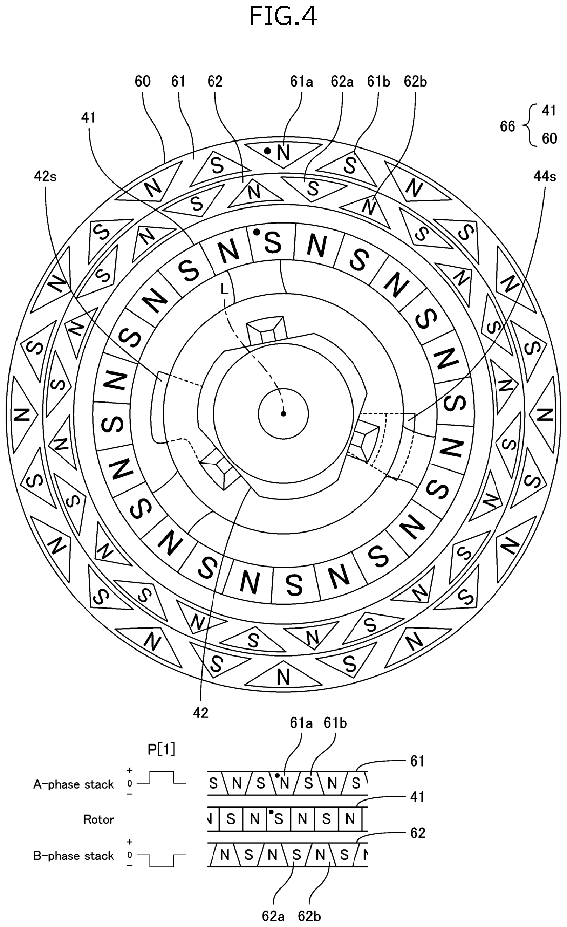

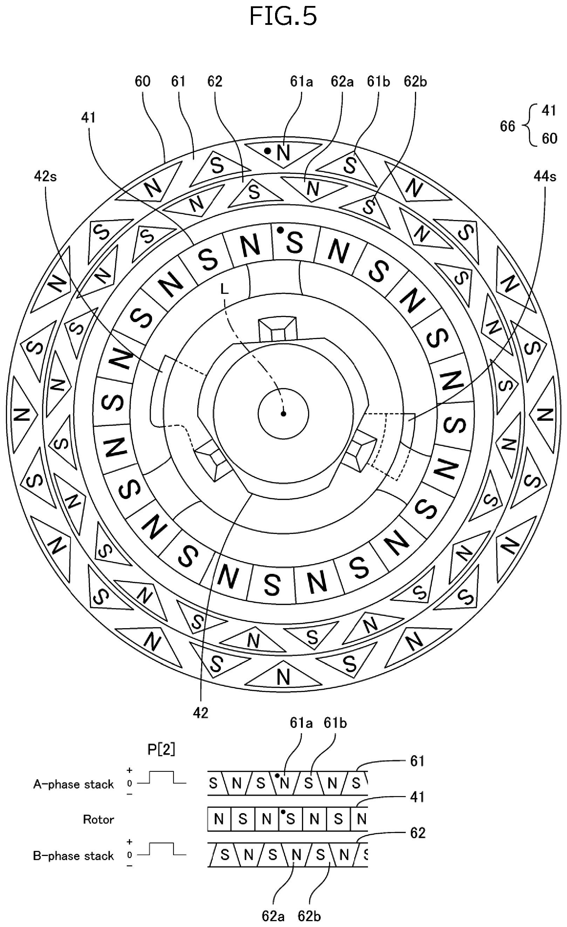

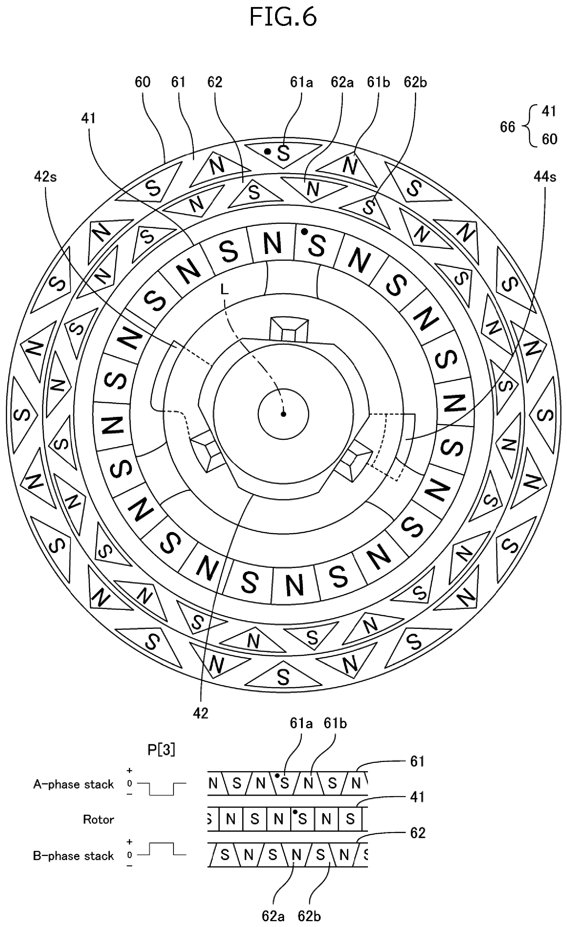

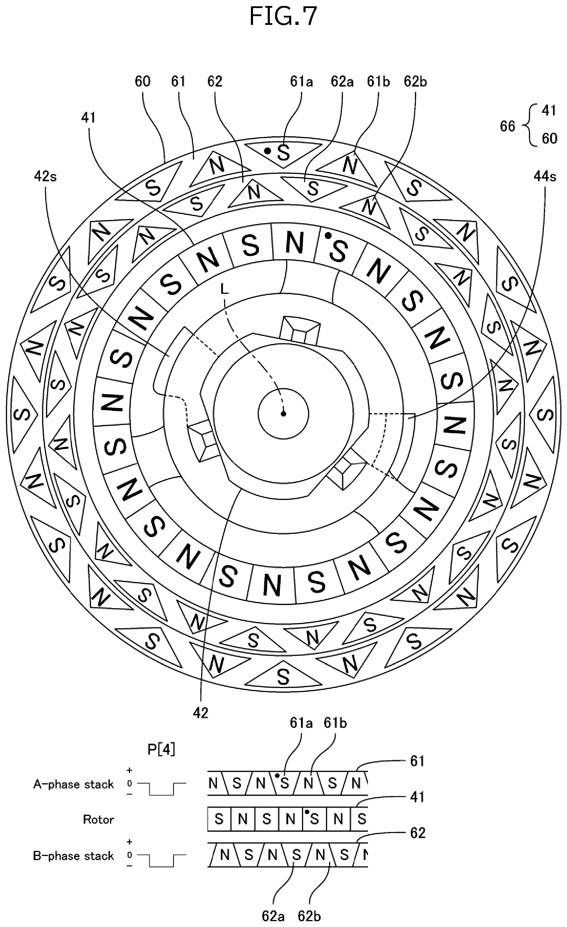

Figs. 4 to 7 schematically illustrate a positional relationship between the magnetic poles of the rotor 41 and the pole teeth of the stator 60 when pulses P[1] to P[4] are input to the stepping motor 66. Figs. 4 to 7 schematically illustrate the magnetic poles of the rotor 41 and the stator 60. In Figs. 4 to 7, the reference pole tooth 61a and the reference magnetic pole (S pole) of the rotor 41 are marked with a dot to facilitate recognition of the positional relationship between the rotor 41 and the stator 60 (the A-phase stack 61 and the B-phase stack 62).

When the pulses P are cyclically input to the stepping motor 66 in ascending order to rotate the rotor 41 in the first direction, a screw-feed action between the internal thread 42c of the valve stem holder 42 and the external thread 43c of the guide bush 43 moves the rotor 41 and the valve stem holder 42 downward. The valve stem holder 42 pushes the valve member 30 downward via the valve closing spring 47. The valve member 30 moves downward, and the plug portion 33 comes into contact with the valve seat 18. At this time, the rotor 41 is at a valve closing position Rc. When the rotor 41 is further rotated in the first direction from this position, the valve closing spring 47 is compressed, and the rotor 41 and the valve stem holder 42 further move downward. The valve member 30 does not move downward. When the movable stopper 42s comes into contact with the fixed stopper 44s, the rotation of the rotor 41 in the first direction is restricted. At this time, the rotor 41 is at a reference position Rx. The movable stopper 42s and the fixed stopper 44s constitute a stopper mechanism 49 that restricts the rotation of the rotor 41 in the first direction when the rotor 41 is at the reference position Rx.

When the pulses P are cyclically input to the stepping motor 66 in descending order to rotate the rotor 41 in the second direction, the screw-feed action between the internal thread 42c of the valve stem holder 42 and the external thread 43c of the guide bush 43 moves the rotor 41 and the valve stem holder 42 upward. The valve stem holder 42 pushes the retaining member 45 upward. The valve member 30 moves upward together with the retaining member 45 and moves away from the valve seat 18. A valve opening position Ro is defined as the position of the rotor 41 when the fluid flow rate at the valve port 17 (i.e., the opening degree of the valve port 17) is at a predetermined value in a predetermined flow-rate measuring environment. The predetermined value is appropriately set according to the configuration, the application, or similar factors of the motor-operated valve device 1. When the rotor 41 is rotated in the second direction and reaches a full-open position Rz, the valve member 30 is positioned farthest from the valve port 17, and the opening degree of the valve port 17 reaches its maximum.

The number of pulses P required to rotate the rotor 41 from the full-open position Rz to the reference position Rx is referred to as a stroke number Ns. In other words, when the rotor 41 is at the full-open position Rz in the motor-operated valve 5 and then Ns pulses P are input to the stepping motor 66, the rotor 41 is moved to the reference position Rx. For example, the stroke number Ns is 500.

In the motor-operated valve 5, the respective central axes of the valve port 17, the valve seat 18, the can 20, the valve member 30, the rotor 41, the valve stem holder 42, the guide bush 43, and the stator 60 (the A-phase stack 61 and the B-phase stack 62) are aligned with the axis L.

The motor-operated valve control device 70 includes a circuit board 71 on which electronic components (not illustrated) are mounted. As illustrated in Fig. 1, the motor-operated valve control device 70 includes a non-volatile memory 75, a communication device 76, a motor driver 77, and a computer 80. The motor-operated valve control device 70 controls the motor-operated valve 5 based on a command from the air conditioner control device 110.

The non-volatile memory 75 stores data that needs to be retained even when power is turned off. The non-volatile memory 75 stores, for example, the position of the rotor 41 immediately before power to the motor-operated valve control device 70 is turned off. The non-volatile memory 75 is, for example, an EEPROM or flash memory.

The communication device 76 is connected to the air conditioner control device 110 via a wired communication bus 120 and can communicate therewith. The air conditioner 100 utilizes a communication system such as Local Interconnect Network (LIN) or Controller Area Network (CAN). The communication device 76 may be wirelessly connected to and can communicate with the air conditioner control device 110.

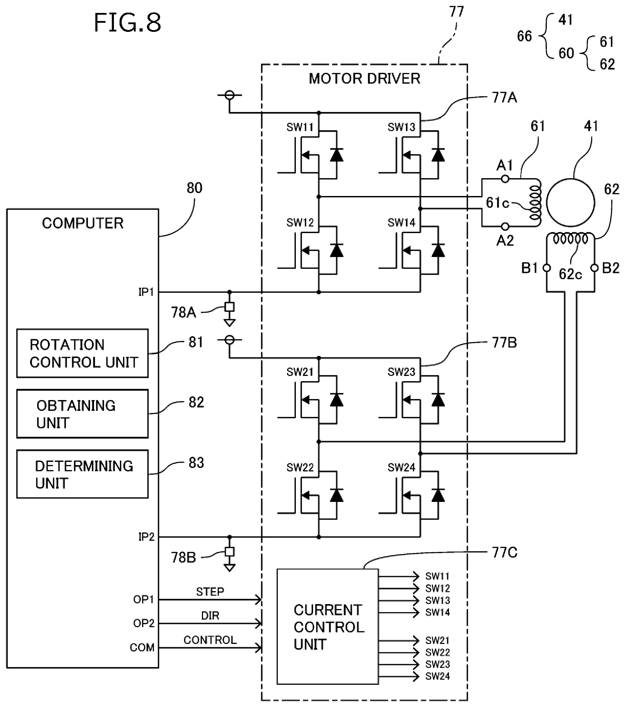

Fig. 8 is a diagram schematically illustrating the computer 80 and the motor driver 77 that are included in the motor-operated valve control device 70, and the stepping motor 66. The motor driver 77 is connected to the stepping motor 66 (the A-phase coil 61c and the B-phase coil 62c) and the computer 80.

The motor driver 77 is controlled by the computer 80. The motor driver 77 supplies driving currents to the stator 60 to rotate the rotor 41. The motor driver 77 supplies an A-phase current Ia to the A-phase coil 61c and supplies a B-phase current Ib to the B-phase coil 62c.

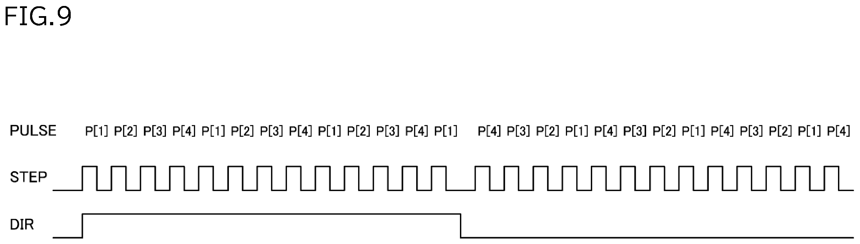

A step signal (STEP) and a direction signal (DIR) are input to the motor driver 77 from the computer 80. The step signal is a pulse signal. Inputting the step signal to the motor driver 77 while the direction signal indicating the first direction (for example, an H-level signal) is being input to the motor driver 77 corresponds to inputting the pulses P to the stepping motor 66 in ascending order. Inputting the step signal to the motor driver 77 while the direction signal indicating the second direction (for example, an L-level signal) is being input to the motor driver 77 corresponds to inputting the pulses P to the stepping motor 66 in descending order. Fig. 9 schematically illustrates an example of a relationship between the pulses P input to the stepping motor 66 and the step signal and the direction signal input to the motor driver 77.

A current control signal (CONTROL) is also input to the motor driver 77 from the computer 80. The current control signal is used to set target values (an A-phase current target value and a B-phase current target value) of the A-phase current Ia and the B-phase current Ib in the motor driver 77.

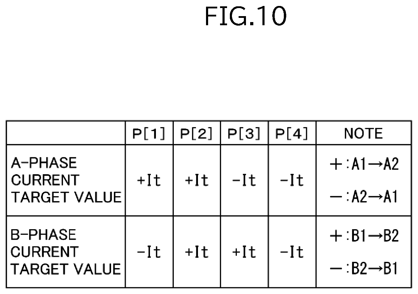

Fig. 10 illustrates an example of a correspondence between the pulses P and the A-phase current target values and the B-phase current target values.

"+It" is set for pulse P[1] as the A-phase current target value, and "-It" is set for pulse P[1] as the B-phase current target value.

"+It" is set for pulse P[2] as the A-phase current target value, and "+It" is set for pulse P[2] as the B-phase current target value.

"-It" is set for pulse P[3] as the A-phase current target value, and "+It" is set for pulse P[3] as the B-phase current target value.

"-It" is set for pulse P[4] as the A-phase current target value, and "-It" is set for pulse P[4] as the B-phase current target value.

Currents indicated as "+It" and "-It" have the same magnitude and flow in opposite directions.

The magnitude of the target values (|It|) is, for example, from 200 mA to 600 mA.

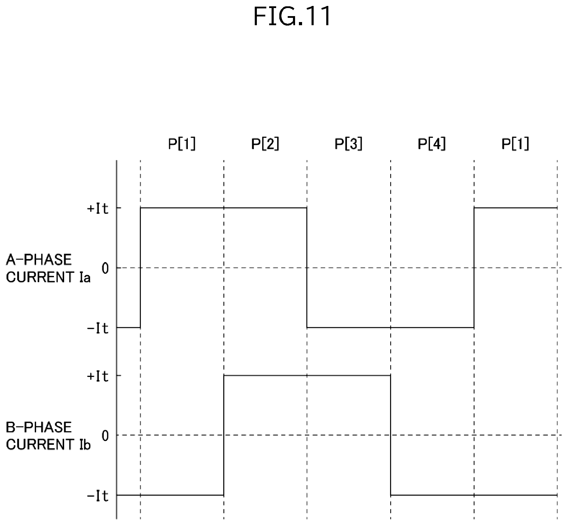

Fig. 11 schematically illustrates examples of waveforms of the A-phase current Ia and the B-phase current Ib when the pulses P are input to the stepping motor 66 in ascending order. The A-phase current Ia and the B-phase current Ib are rectangular wave currents that alternately change between a first current value and a second current value.

In Figs. 10 and 11, the sign (+/-) indicates the direction in which the current flows. "+" indicates the direction from a terminal A1 to a terminal A2 or from a terminal B1 to a terminal B2. "-" indicates the direction from the terminal A2 to the terminal A1 or from the terminal B2 to the terminal B1.

In the embodiment, the period of the pulse P is 8 milliseconds, and a single time period consisting of pulses P[1] to P[4] is 32 milliseconds. The stepping motor 66 is controlled in a full-step mode. The step angle of the stepping motor 66 is 7.5 degrees. The stepping motor 66 may be controlled in a half-step mode or a micro-step mode.

The motor driver 77 includes H-bridge circuits 77A and 77B, and a current control unit 77C. The motor driver 77 drives the stepping motor 66 using a bipolar driving method.

The H-bridge circuit 77A is connected to the A-phase coil 61c. The H-bridge circuit 77A includes switches SW11, SW12, SW13, and SW14. The upstream end of the H-bridge circuit 77A is connected to a power source, and the downstream end of the H-bridge circuit 77A is connected to the reference potential of the circuit board 71 via a shunt resistor 78A.

The H-bridge circuit 77B is connected to the B-phase coil 62c. The H-bridge circuit 77B includes switches SW21, SW22, SW23, and SW24. The upstream end of the H-bridge circuit 77B is connected to the power source, and the downstream end of the H-bridge circuit 77B is connected to the reference potential of the circuit board 71 via a shunt resistor 78B.

The switches SW11, SW12, SW13, SW14, SW21, SW22, SW23, and SW24 may be, for example, either N-channel MOSFETs or P-channel MOSFETs, or a mixture of both.

The switches SW11, SW12, SW13, SW14, SW21, SW22, SW23, and SW24 are controlled to be turned on (the conductive state) or turned off (the non-conductive state).

The current control unit 77C controls the H-bridge circuits 77A and 77B using a pulse width modulation (PWM) scheme according to the step and direction signals from the computer 80. In the embodiment, the PWM frequency is 20 kHz.

When the A-phase current Ia flowing through the A-phase coil 61c from the terminal A1 to the terminal A2 is supplied:
(1) the current control unit 77C turns off the switches SW12 and SW13, and
(2) the current control unit 77C controls the on-time (i.e., the duty cycle) of the switches SW11 and SW14 such that the magnitude of the A-phase current Ia matches the magnitude of the A-phase current target value.

When the A-phase current Ia flowing through the A-phase coil 61c from the terminal A2 to the terminal A1 is supplied:
(1) the current control unit 77C turns off the switches SW11 and SW14, and
(2) the current control unit 77C controls the on-time of the switches SW12 and SW13 such that the magnitude of the A-phase current Ia matches the magnitude of the A-phase current target value.

When the B-phase current Ib flowing through the B-phase coil 62c from the terminal B1 to the terminal B2 is supplied:
(1) the current control unit 77C turns off the switches SW22 and SW23, and
(2) the current control unit 77C controls the on-time of the switches SW21 and SW24 such that the magnitude of the B-phase current Ib matches the magnitude of the B-phase current target value.

When the B-phase current Ib flowing through the B-phase coil 62c from the terminal B2 to the terminal B1 is supplied:
(1) the current control unit 77C turns off the switches SW21 and SW24, and
(2) the current control unit 77C controls the on-time of the switches SW22 and SW23 such that the magnitude of the B-phase current Ib matches the magnitude of the B-phase current target value.

The A-phase current Ia and the B-phase current Ib are controlled by the pulse width modulation scheme. Each switch is turned on and off at intervals shorter than the period of the pulse P to drive the A-phase current Ia and the B-phase current Ib toward their respective target values.

The computer 80 is a microcomputer for embedded devices and incorporates a CPU, ROM, RAM, an analog-to-digital converter (ADC), and similar components in a single package. The computer 80 may incorporate the non-volatile memory 75, the communication device 76, and the motor driver 77. The computer 80 is a processor.

The computer 80 includes output ports OP1 and OP2. The output ports OP1 and OP2 are connected to the motor driver 77. The computer 80 outputs the step signal and the direction signal from the output ports OP1 and OP2. The computer 80 includes a communication port COM connected to the motor driver 77. The computer 80 outputs the current control signal from the communication port COM. The computer 80 receives information provided by the motor driver 77 via the communication port COM.

The computer 80 includes input ports IP1 and IP2. The input ports IP1 and IP2 are connected to the downstream ends of the H-bridge circuits 77A and 77B. The voltage input to the input port IP1 is converted by the ADC into information representing the A-phase current Ia flowing through the A-phase coil 61c. The voltage input to the input port IP2 is converted by the ADC into information representing the B-phase current Ib flowing through the B-phase coil 62c. The computer 80 (the CPU) obtains information converted by the ADC as the A-phase current Ia and the B-phase current Ib.

The computer 80 functions as a rotation control unit 81, an obtaining unit 82, and a determining unit 83 through CPU execution of a program stored in the ROM.

The rotation control unit 81 is configured to input the pulses P to the stepping motor 66 to rotate the rotor 41 in the first direction or the second direction. Specifically, the rotation control unit 81 is configured to control the motor driver 77 based on a command from the air conditioner control device 110 to supply the A-phase current Ia to the A-phase coil 61c and supply the B-phase current Ib to the B-phase coil 62c. The rotation control unit 81 is configured to input the step signal, the direction signal, and the current control signal to the motor driver 77.

The obtaining unit 82 is configured to obtain information regarding a transition period during which the A-phase current Ia flowing through the A-phase coil 61c changes from the first current value to the second current value. The obtaining unit 82 may be configured to obtain information regarding a transition period during which the B-phase current Ib flowing through the B-phase coil 62c changes from the first current value to the second current value. Examples of information regarding the transition period are shown below.

When the first current value is "-It" and the second current value is "+It", the information is:
(1) a time duration (a rise time) from a starting point to an ending point of the transition period (a rising period),
(2) an average value of a plurality of rise times,
(3) a variation amount of a plurality of rise times,
(4) a duty cycle during a determination period E including the rising period, or
(5) a difference between a waveform of the A-phase current Ia during a determination period E including the rising period and a reference waveform of the A-phase current Ia.

When the first current value is "+It" and the second current value is "-It", the information is:
(6) a time duration (a fall time) from a starting point to an ending point of the transition period (a falling period),
(7) an average value of a plurality of fall times,
(8) a variation amount of a plurality of fall times,
(9) a duty cycle during a determination period E including the falling period, or
(10) a difference between a waveform of the A-phase current Ia during a determination period E including the falling period and a reference waveform of the A-phase current Ia.

The obtaining unit 82 is configured to obtain, for example, information regarding the transition period based on the A-phase current Ia and the B-phase current Ib, which are received via the ADC. If the motor driver 77 is configured to provide the information (for example, the time duration of the transition period or the duty cycle), the obtaining unit 82 may be configured to obtain the information from the motor driver 77. The duration of the determination period E is less than or equal to the period of the pulse P and is, for example, half of that period (4 milliseconds). The starting point of the determination period E may coincide with, or may be later than, the starting point of the period of the pulse P.

The determining unit 83 is configured to determine the state of the motor-operated valve 5 by using information regarding the transition period obtained by the obtaining unit 82. The motor-operated valve 5 has a rotation permitted state Sp, a first-direction rotation restricted state Sr, and a fault state Sf including a rotation locked state Sc.

The rotation permitted state Sp is a state where the rotation of the rotor 41 in both the first and second directions is permitted.

The first-direction rotation restricted state Sr is a state where the rotor 41 has reached the reference position Rx, where the movable stopper 42s is in contact with the fixed stopper 44s, and where the rotation of the rotor 41 in the first direction is restricted. In the first-direction rotation restricted state Sr, the rotor 41 is at the reference position Rx. In the first-direction rotation restricted state Sr, the rotation of the rotor 41 in the second direction is not restricted.

The fault state Sf is a state where failure of the motor-operated valve 5 is suspected. For example, when foreign matter contained in the refrigerant enters the driving mechanism 40, or when the viscosity of refrigerating machine oil in the refrigerant increases at low temperatures, thereby impeding normal rotation of the rotor 41, the motor-operated valve 5 is determined to be in the fault state Sf. The fault state Sf includes a state where the rotation of the rotor 41 in both the first and second directions is restricted, and this state is referred to as the rotation locked state Sc.

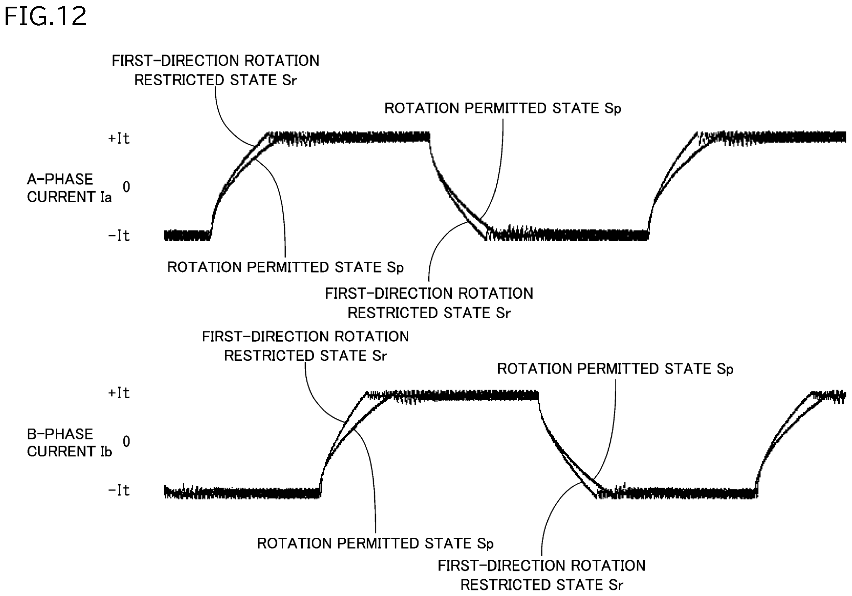

The inventors supplied driving currents (the A-phase current Ia and the B-phase current Ib) to the coils (the A-phase coil 61c and the B-phase coil 62c) of the stator 60 of the motor-operated valve 5 and observed waveforms of the driving currents flowing through the coils. Fig. 12 illustrates examples of waveforms of driving currents flowing through the coils. In Fig. 12, the waveform of the driving current measured when the motor-operated valve 5 is in the rotation permitted state Sp is superimposed on the waveform of the driving current measured when the motor-operated valve 5 is in the first-direction rotation restricted state Sr. In Fig. 12, time advances from left to right.

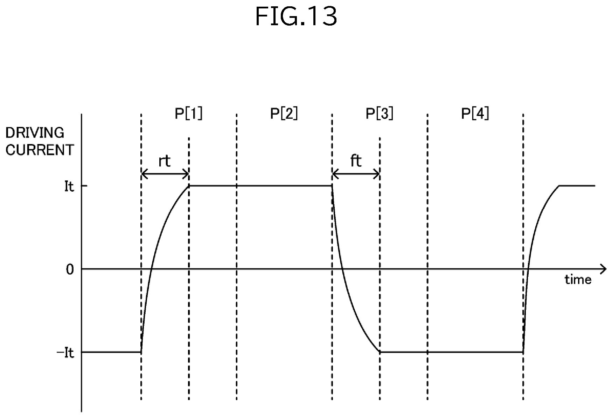

As illustrated in Fig. 12, the waveform of the driving current when the motor-operated valve 5 is in the first-direction rotation restricted state Sr reaches the target value earlier than the waveform of the driving current when the motor-operated valve 5 is in the rotation permitted state Sp. Although not illustrated, the waveform of the driving current when the motor-operated valve 5 is in the rotation locked state Sc also reaches the target value earlier than the waveform of the driving current when the motor-operated valve 5 is in the rotation permitted state Sp. That is, the rise time when the motor-operated valve 5 is in the first-direction rotation restricted state Sr (or the rotation locked state Sc) is shorter than the rise time when the motor-operated valve 5 is in the rotation permitted state Sp. The fall time when the motor-operated valve 5 is in the first-direction rotation restricted state Sr (or the rotation locked state Sc) is shorter than the fall time when the motor-operated valve 5 is in the rotation permitted state Sp. Fig. 13 illustrates a time duration rt (the rise time) from the starting point to the ending point of the rising period and a time duration ft (the fall time) from the starting point to the ending point of the falling period.

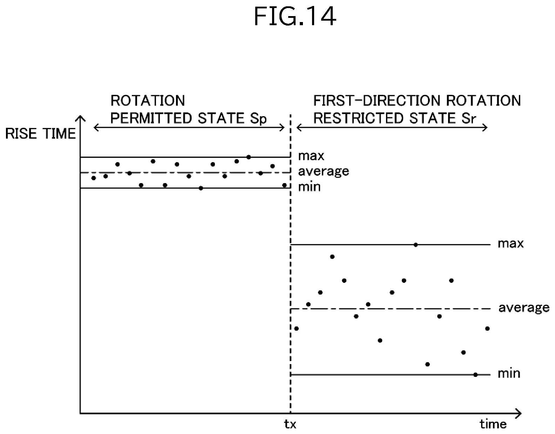

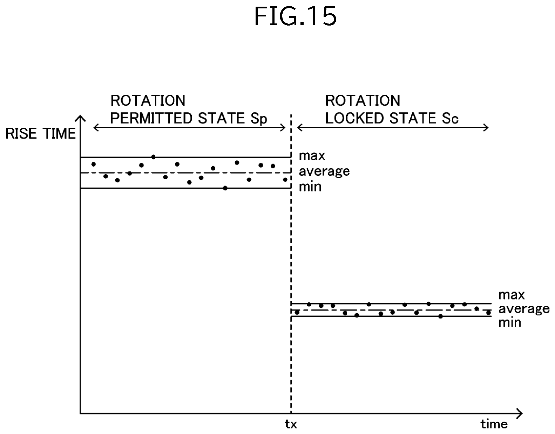

Next, the inventors measured the rise time of the driving current flowing through the coil. Figs. 14 and 15 illustrate examples of the rise times measured in a time-series manner. In Fig. 14, the motor-operated valve 5 is in the rotation permitted state Sp before time point tx, and is in the first-direction rotation restricted state Sr after time point tx. In Fig. 15, the motor-operated valve 5 is in the rotation permitted state Sp before time point tx, and is in the rotation locked state Sc after time point tx. Each dot corresponds to the rise time.

As illustrated in Figs. 14 and 15, when the motor-operated valve 5 is in the rotation permitted state Sp, the rise time is long, and the difference between its maximum and minimum values is small. When the motor-operated valve 5 is in the first-direction rotation restricted state Sr, the rise time is short, and the difference between its maximum and minimum values is large. When the motor-operated valve 5 is in the rotation locked state Sc, the rise time is short, and the difference between its maximum and minimum values is very small. That is, when the motor-operated valve 5 is in the rotation permitted state Sp, the average value of the rise times is large, and the variation amount of the rise times is small. When the motor-operated valve 5 is in the first-direction rotation restricted state Sr, the average value of the rise times is small, and the variation amount of the rise times is large. When the motor-operated valve 5 is in the rotation locked state Sc, the average value of the rise times is small, and the variation amount of the rise times is very small. Therefore, the state of the motor-operated valve 5 can be determined by using at least one of the average value and the variation amount of the rise times.

In addition, the rise time when the motor-operated valve 5 is in the rotation permitted state Sp is long, whereas the rise time when the motor-operated valve 5 is in the first-direction rotation restricted state Sr (or the rotation locked state Sc) is short. Therefore, the slope of the rising waveform when the motor-operated valve 5 is in the rotation permitted state Sp is smaller than the slope of the rising waveform when the motor-operated valve 5 is in the first-direction rotation restricted state Sr (or the rotation locked state Sc). The rising waveform is the waveform of the driving current during the rising period.

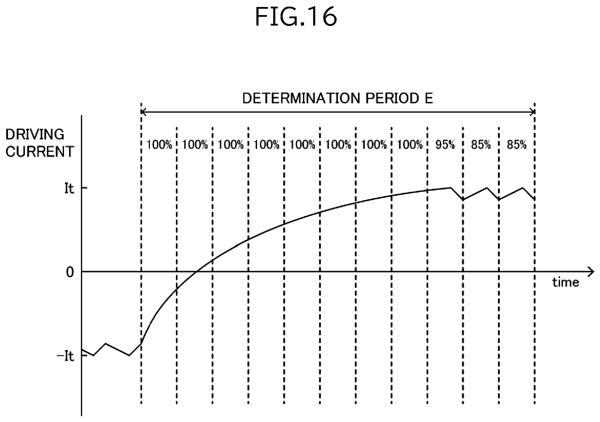

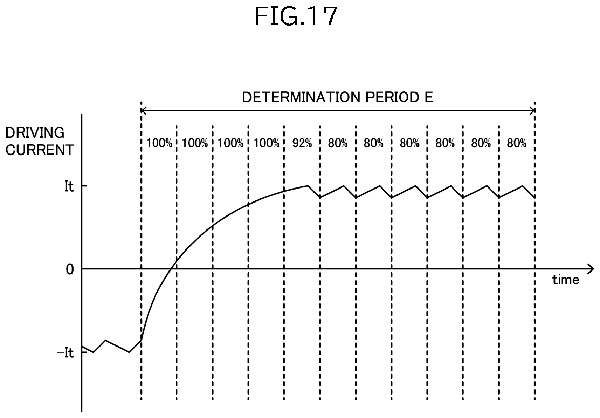

Next, the inventors measured the duty cycle of the driving current flowing through the coil. Figs. 16 and 17 illustrate examples of waveforms of the driving current and the duty cycle during the determination period E that includes the rising period (the transition period). "Including a transition period" means "including at least a part of the transition period". The determination period E only needs to include a part of the transition period sufficient for determining the state of the motor-operated valve 5. Fig. 16 illustrates the waveform of the driving current when the motor-operated valve 5 is in the rotation permitted state Sp, and Fig. 17 illustrates the waveform of the driving current when the motor-operated valve 5 is in the first-direction rotation restricted state Sr. In the rising period, the duty cycle is 100%. In a period following the rising period in which the driving current is maintained at the target value (+It), the duty cycle is less than 100%. The number of times the duty cycle reaches 100% in the first-direction rotation restricted state Sr (or the rotation locked state Sc) is less than the number of times the duty cycle reaches 100% in the rotation permitted state Sp. Therefore, the state of the motor-operated valve 5 can be determined by using the duty cycle during the determination period E including the rising period.

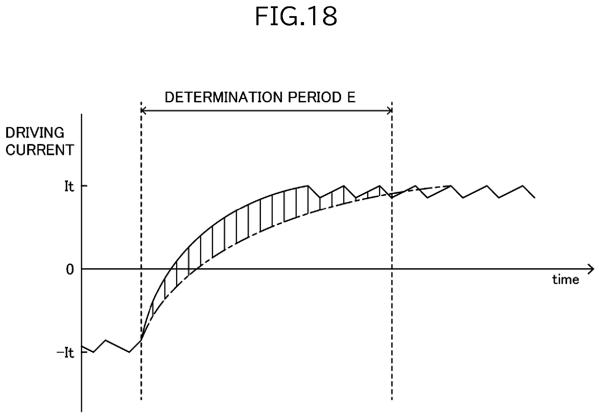

Next, the inventors observed waveforms of the driving current flowing through the coil. Fig. 18 illustrates waveforms of the driving current during the determination period E that includes the rising period (the transition period). In Fig. 18, the one-dot chain line indicates the waveform of the driving current in the rotation permitted state Sp, and the solid line indicates the waveform of the driving current in the first-direction rotation restricted state Sr. The waveform of the driving current in the rotation permitted state Sp differs from the waveform of the driving current in the first-direction rotation restricted state Sr (or the rotation locked state Sc). Therefore, the state of the motor-operated valve 5 can be determined by using the waveform of the driving current during the determination period E including the rising period.

The fall time (the falling period) may be used instead of the rise time (the rising period) to determine the state of the motor-operated valve 5. The state of the motor-operated valve 5 can be determined by using at least one of the average value of the fall times and the variation amount of the fall times. The state of the motor-operated valve 5 can be determined by using the duty cycle during the determination period E including the falling period. The state of the motor-operated valve 5 can be determined by using the waveform of the driving current during the determination period E including the falling period.

The motor-operated valve control device 70 has an initialization mode and a normal mode as operation modes. In the initialization mode, the motor-operated valve control device 70 executes an initialization operation in which the rotor 41 is rotated in the first direction to position the rotor 41 at the reference position Rx. In the normal mode, the motor-operated valve control device 70 executes an operation based on a control command received from the air conditioner control device 110.

When power is turned on, the motor-operated valve control device 70 enters the normal mode and reads the position of the rotor 41 stored in the non-volatile memory 75 as the current position of the rotor 41. When receiving a control command including a target valve opening degree from the air conditioner control device 110, the motor-operated valve control device 70 rotates the rotor 41 from the current position to a position corresponding to the target valve opening degree and sets that position as a new current position. The motor-operated valve control device 70 stores the current position in the non-volatile memory 75 immediately before power is turned off. When receiving an initialization command from the air conditioner control device 110 or when the position of the rotor 41 read from the non-volatile memory 75 is abnormal, the motor-operated valve control device 70 enters the initialization mode and executes the initialization operation. After executing the initialization operation, the motor-operated valve control device 70 enters the normal mode.

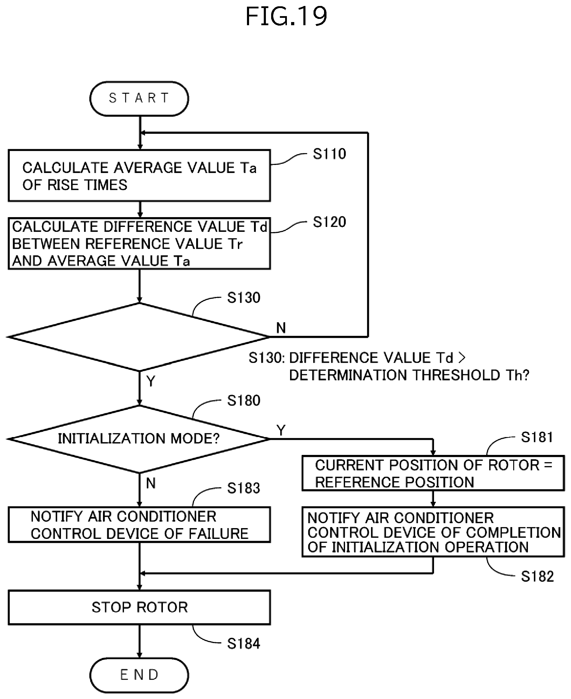

Next, a first operation example of the motor-operated valve control device 70 is described with reference to Fig. 19.

When driving currents are supplied to the coils of the stator 60, the motor-operated valve control device 70 (the computer 80) calculates an average value Ta of a plurality of rise times (S110). Specifically, when the rotor 41 is rotating, the motor-operated valve control device 70 obtains rise times of the A-phase current Ia, and upon obtaining a predetermined number (for example, ten) of rise times, calculates the average value Ta of these rise times.

The motor-operated valve control device 70 calculates a difference value Td between a reference value Tr and the average value Ta (S120). The difference value Td is a value obtained by subtracting the average value Ta from the reference value Tr. The reference value Tr is set based on, for example, the average value Ta of the motor-operated valve 5 in the rotation permitted state Sp. Separate reference values Tr may be provided for when the rotor 41 rotates in the first direction and when it rotates in the second direction.

The motor-operated valve control device 70 determines whether the difference value Td is greater than a determination threshold Th (S130). The determination threshold Th is set based on, for example, a difference value between the average value Ta of the motor-operated valve 5 in the rotation permitted state Sp and the average value Ta of the motor-operated valve 5 in the first-direction rotation restricted state Sr (or the rotation locked state Sc). Separate determination thresholds Th may be provided for when the rotor 41 rotates in the first direction and when it rotates in the second direction.

When the difference value Td is less than or equal to the determination threshold Th (N in S130), the motor-operated valve control device 70 determines that the motor-operated valve 5 is in the rotation permitted state Sp and returns to the calculation of the average value Ta (S110).

When the difference value Td is greater than the determination threshold Th (Y in S130), the motor-operated valve control device 70 determines whether it is in the initialization mode (S180).

When the motor-operated valve control device 70 is in the initialization mode (Y in S180), the motor-operated valve control device 70 determines that the motor-operated valve 5 is in the first-direction rotation restricted state Sr, sets the reference position Rx as the current position of the rotor 41 (S181), and notifies the air conditioner control device 110 of the completion of the initialization operation (S182). The motor-operated valve control device 70 stops supplying the driving currents to the coils of the stator 60 and stops the rotation of the rotor 41 (S184).

When the motor-operated valve control device 70 is not in the initialization mode (N in S180), the motor-operated valve control device 70 determines that the motor-operated valve 5 is in the fault state Sf and notifies the air conditioner control device 110 of the failure of the motor-operated valve 5 (S183). The motor-operated valve control device 70 stops supplying the driving currents to the coils of the stator 60 and stops the rotation of the rotor 41 (S184). When the motor-operated valve control device 70 is not in the initialization mode, the motor-operated valve control device 70 is in the normal mode.

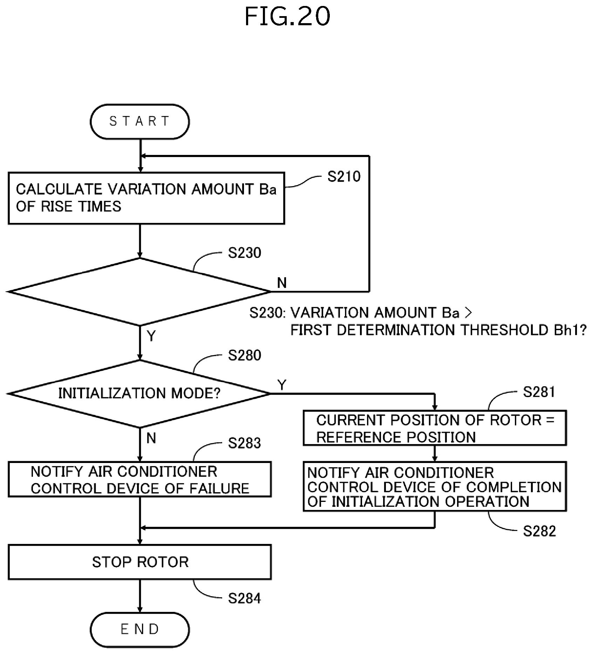

Next, a second operation example of the motor-operated valve control device 70 is described with reference to Fig. 20.

When driving currents are supplied to the coils of the stator 60, the motor-operated valve control device 70 (the computer 80) calculates a variation amount Ba of a plurality of rise times (S210). Specifically, when the rotor 41 is rotating, the motor-operated valve control device 70 obtains rise times of the A-phase current Ia, and upon obtaining a predetermined number (for example, ten) of rise times, calculates the variation amount Ba of these rise times. The variation amount Ba is the standard deviation of a plurality of rise times. The variation amount Ba may be a difference value between the maximum value and the minimum value of a plurality of rise times.

The motor-operated valve control device 70 determines whether the variation amount Ba is greater than a first determination threshold Bh1 (S230). The first determination threshold Bh1 is set based on, for example, the variation amount Ba of the motor-operated valve 5 in the rotation permitted state Sp. Separate first determination thresholds Bh1 may be provided for when the rotor 41 rotates in the first direction and when it rotates in the second direction.

When the variation amount Ba is less than or equal to the first determination threshold Bh1 (N in S230), the motor-operated valve control device 70 determines that the motor-operated valve 5 is in the rotation permitted state Sp and returns to the calculation of the variation amount Ba (S210).

When the variation amount Ba is greater than the first determination threshold Bh1 (Y in S230), the motor-operated valve control device 70 determines whether it is in the initialization mode (S280). Operations in Steps S280 to S284 are the same as operations in Steps S180 to S184 in Fig. 19. Description of the operations in Steps S280 to S284 is omitted.

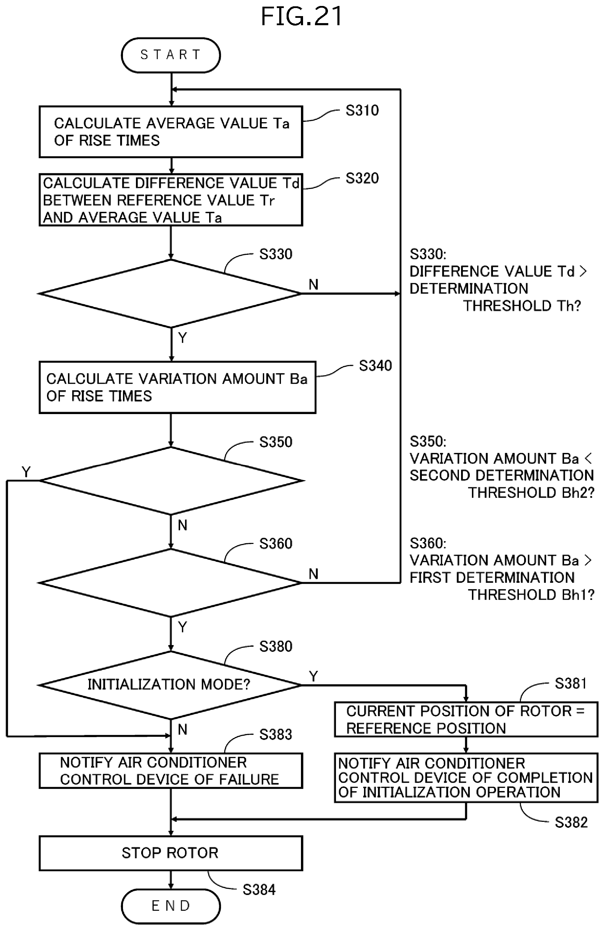

Next, a third operation example of the motor-operated valve control device 70 is described with reference to Fig. 21.

When driving currents are supplied to the coils of the stator 60, the motor-operated valve control device 70 (the computer 80) calculates an average value Ta of a plurality of rise times (S310). The motor-operated valve control device 70 calculates a difference value Td between a reference value Tr and the average value Ta (S320). The motor-operated valve control device 70 determines whether the difference value Td is greater than a determination threshold Th (S330). Operations in Steps S310 to S330 are the same as operations in Steps S110 to S130 in Fig. 19.

When the difference value Td is less than or equal to the determination threshold Th (N in S330), the motor-operated valve control device 70 determines that the motor-operated valve 5 is in the rotation permitted state Sp and returns to the calculation of the average value Ta (S310).

When the difference value Td is greater than the determination threshold Th (Y in S330), the motor-operated valve control device 70 calculates a variation amount Ba of a plurality of rise times (S340). Operation in Step S340 is the same as operation in Step S210 in Fig. 20. The motor-operated valve control device 70 may calculate the variation amount Ba of a plurality of newly obtained rise times or may calculate the variation amount Ba of the plurality of rise times used for calculating the average value Ta.

The motor-operated valve control device 70 determines whether the variation amount Ba is less than a second determination threshold Bh2 (S350). The second determination threshold Bh2 is set based on, for example, the variation amount Ba of the motor-operated valve 5 in the rotation permitted state Sp (or the rotation locked state Sc). Separate second determination thresholds Bh2 may be provided for when the rotor 41 rotates in the first direction and when it rotates in the second direction.

When the variation amount Ba is less than the second determination threshold Bh2 (Y in S350), the motor-operated valve control device 70 determines that the motor-operated valve 5 is in the fault state Sf (the rotation locked state Sc) and proceeds to Step S383.

When the variation amount Ba is greater than or equal to the second determination threshold Bh2 (N in S350), the motor-operated valve control device 70 determines whether the variation amount Ba is greater than a first determination threshold Bh1 (S360). The first determination threshold Bh1 is set based on, for example, the variation amount Ba of the motor-operated valve 5 in the rotation permitted state Sp (or the first-direction rotation restricted state Sr). Separate first determination thresholds Bh1 may be provided for when the rotor 41 rotates in the first direction and when it rotates in the second direction.

When the variation amount Ba is less than or equal to the first determination threshold Bh1 (N in S360), the motor-operated valve control device 70 determines that the motor-operated valve 5 is in the rotation permitted state Sp and returns to the calculation of the average value Ta (S310).

When the variation amount Ba is greater than the first determination threshold Bh1 (Y in S360), the motor-operated valve control device 70 determines whether it is in the initialization mode (S380). Operations in Steps S380 to S384 are the same as operations in Steps S180 to S184 in Fig. 19. Description of the operations in Steps S380 to S384 is omitted.

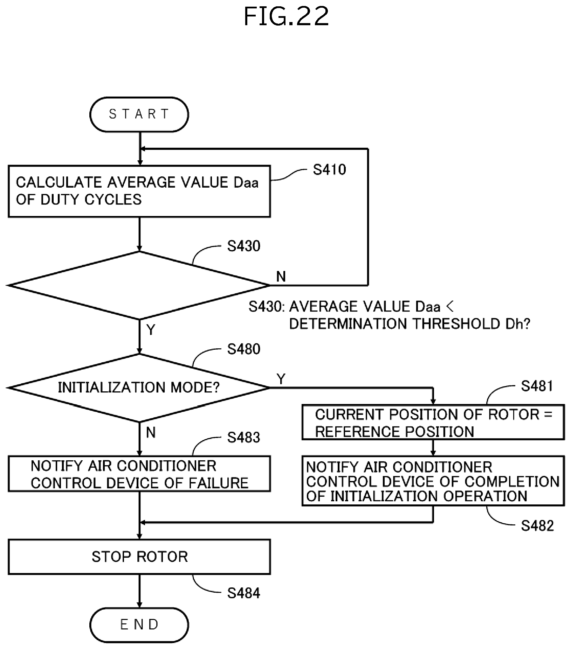

Next, a fourth operation example of the motor-operated valve control device 70 is described with reference to Fig. 22.

When driving currents are supplied to the coils of the stator 60, the motor-operated valve control device 70 (the computer 80) calculates an average value Daa of a plurality of duty cycles (S410). Specifically, when the rotor 41 is rotating, the motor-operated valve control device 70 obtains duty cycles of the A-phase current Ia during a determination period E including a rising period and calculates the average value Da of these duty cycles. After a predetermined number (for example, ten) of average values Da have been calculated, the motor-operated valve control device 70 calculates the average value Daa of these average values Da.

The motor-operated valve control device 70 determines whether the average value Daa is less than a determination threshold Dh (S430). The determination threshold Dh is set based on, for example, the average value Daa of the motor-operated valve 5 in the rotation permitted state Sp. Separate determination thresholds Dh may be provided for when the rotor 41 rotates in the first direction and when it rotates in the second direction.

When the average value Daa is greater than or equal to the determination threshold Dh (N in S430), the motor-operated valve control device 70 determines that the motor-operated valve 5 is in the rotation permitted state Sp and returns to the calculation of the average value Daa (S410).

When the average value Daa is less than the determination threshold Dh (Y in S430), the motor-operated valve control device 70 determines whether it is in the initialization mode (S480). Operations in Steps S480 to S484 are the same as operations in Steps S180 to S184 in Fig. 19. Description of the operations in Steps S480 to S484 is omitted.

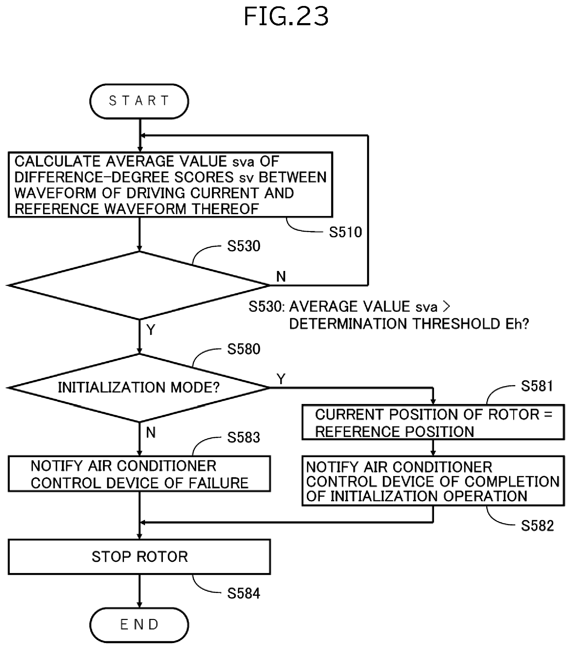

Next, a fifth operation example of the motor-operated valve control device 70 is described with reference to Fig. 23.

First, a difference-degree score sv used in the fifth operation example is described.

The difference-degree score sv is a value indicating a degree of difference between the waveform of the A-phase current Ia and a reference waveform of the A-phase current Ia. A greater difference-degree score sv indicates a greater degree of the difference between the waveform of the A-phase current Ia and the reference waveform of the A-phase current Ia. The motor-operated valve control device 70 calculates the difference-degree score sv.

When the rotor 41 is rotating, the motor-operated valve control device 70 obtains a waveform of the A-phase current Ia during a determination period E including a rising period. Specifically, the motor-operated valve control device 70 samples the A-phase current Ia values (current values ia) at a predetermined sampling period in a time-series manner.

The current values ia sampled in a time-series manner represent a waveform of the A-phase current Ia. In this specification, "waveform" refers to the variation in a physical quantity (current) over time at a fixed point. "Waveform" is visualized on a coordinate plane, with the vertical axis representing physical quantity and the horizontal axis representing time. The word "waveform" can also refer to non-visual representations, such as a data table that has physical quantity data associated with time data and is stored in the RAM of the computer 80 or the non-volatile memory 75.

The reference waveform of the A-phase current Ia is set based on, for example, a waveform of the A-phase current Ia of the motor-operated valve 5 in the rotation permitted state Sp. Separate reference waveforms of the A-phase current Ia are provided for when the rotor 41 rotates in the first direction and when it rotates in the second direction. The reference waveforms of the A-phase current Ia are stored in the non-volatile memory 75 at the time of manufacturing the motor-operated valve device 1.

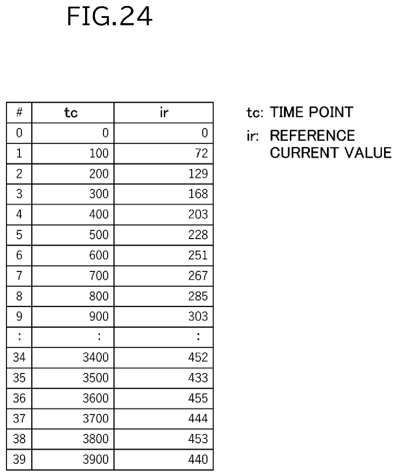

Each reference waveform of the A-phase current Ia is stored in the non-volatile memory 75 as a data table. In the data table, time points tc, defined at predetermined intervals from the starting point (time point 0) of the determination period E, are each associated with a reference current value ir at the corresponding time point tc. The intervals between the time points tc are equal to the sampling interval (100 microseconds). Each data table includes 40 pairs of the time point tc and the reference current value ir. Fig. 24 illustrates an example of the data table. In Fig. 24, the unit of the time point tc is microseconds, and the unit of the reference current value ir is milliamperes.

When the current value ia is obtained at a sampling time t, the motor-operated valve control device 70 reads the reference current value ir associated with the time point tc corresponding to the sampling time t from the data table. The motor-operated valve control device 70 calculates a value (a difference value dv) by subtracting the reference current value ir from the current value ia. The motor-operated valve control device 70 calculates a squared value (an intermediate value dv2) of the difference value dv. The motor-operated valve control device 70 calculates the difference-degree score sv by summing a plurality of intermediate values dv2 calculated for a single determination period E.

The difference-degree score sv is given by Expression (1) below, where ia[t] represents the current value ia obtained at a sampling time t from the starting point (time point t1) to the ending point (time point t2) of the determination period E, and ir[t] represents the reference current value ir associated with the time point tc corresponding to the sampling time t in the data table of the reference waveform. $sv = {\sum }_{t = t 1}^{t 2} {\left(ia\left[t\right]-ir\left[t\right]\right)}^{2}$ (1)

The difference-degree score sv is not limited to being obtained by the calculation using Expression (1) above. For example, the difference-degree score sv may be related to a change over time in the magnitude of the current value ia at the sampling times t. Specifically, the motor-operated valve control device 70 calculates a difference value dv between the current value ia obtained at the sampling time t and the reference current value ir associated with the time point tc corresponding to the sampling time t. The difference value dv is calculated as an absolute value. The motor-operated valve control device 70 uses, as a difference-degree score, the number of difference values dv, which are calculated for the determination period E and are greater than or equal to a predetermined difference threshold. This difference-degree score also appropriately reflects the degree of difference in the shapes of the waveforms.

In the fifth operation example, when driving currents are supplied to the coils of the stator 60, the motor-operated valve control device 70 (the computer 80) calculates an average value sva of a plurality of difference-degree scores sv (S510). Specifically, when the rotor 41 is rotating, the motor-operated valve control device 70 obtains a waveform of the A-phase current Ia during a determination period E including a rising period and calculates the difference-degree score sv. After a predetermined number (for example, ten) of difference-degree scores sv have been calculated, the motor-operated valve control device 70 calculates the average value sva of these difference-degree scores sv. The smaller the average value sva, the more similar the waveform of the A-phase current Ia is to the reference waveform based on the A-phase current Ia in the rotation permitted state Sp.

The motor-operated valve control device 70 determines whether the average value sva is greater than a determination threshold Eh (S530). The determination threshold Eh is set based on, for example, the average value sva of the motor-operated valve 5 in the rotation permitted state Sp. Separate determination thresholds Eh are provided for when the rotor 41 rotates in the first direction and when it rotates in the second direction.

When the average value sva is less than or equal to the determination threshold Eh (N in S530), the motor-operated valve control device 70 determines that the motor-operated valve 5 is in the rotation permitted state Sp and returns to the calculation of the average value sva (S510).

When the average value sva is greater than the determination threshold Eh (Y in S530), the motor-operated valve control device 70 determines whether it is in the initialization mode (S580). Operations in Steps S580 to S584 are the same as operations in Steps S180 to S184 in Fig. 19. Description of the operations in Steps S580 to S584 is omitted.

The determination threshold Eh may be set based on the average value sva of the motor-operated valve 5 in the first-direction rotation restricted state Sr. In this configuration, the motor-operated valve control device 70 determines whether the average value sva is less than the determination threshold Eh (S530), proceeds to Step S510 when the average value sva is greater than or equal to the determination threshold Eh (N in S530), and proceeds to Step S580 when the average value sva is less than the determination threshold Eh (Y in S530).

In the first to fifth operation examples, the motor-operated valve control device 70 determines the state of the motor-operated valve 5 by using the A-phase current Ia during the determination period E including the rising period, but it may instead determine the state by using the A-phase current Ia during the determination period E including the falling period. In the first to fifth operation examples, the motor-operated valve control device 70 determines the state of the motor-operated valve 5 by using the A-phase current Ia, but it may instead determine the state by using the B-phase current Ib, or by using both the A-phase current Ia and the B-phase current Ib.

The reference value Tr and the determination threshold Th (in the first operation example), the first determination threshold Bh1 and the second determination threshold Bh2 (in the second and third operation examples), the determination threshold Dh (in the fourth operation example), and the determination threshold Eh (in the fifth operation example) are stored in the non-volatile memory 75 at the time of manufacturing the motor-operated valve device 1. For example, in response to a command from the air conditioner control device 110, the motor-operated valve control device 70 may set (update) the reference value Tr, the determination threshold Th, the first determination threshold Bh1, the second determination threshold Bh2, the determination threshold Dh, and the determination threshold Eh. The motor-operated valve control device 70 may also set (update) the reference waveform of the A-phase current Ia (in the fifth operation example).

As described above, the motor-operated valve device 1 includes the motor-operated valve 5 and the motor-operated valve control device 70. The motor-operated valve 5 includes the valve body 10 that has the valve port 17, the rotor 41, the stator 60 that includes the A-phase coil 61c and the B-phase coil 62c to which the A-phase current Ia and the B-phase current Ib are supplied to rotate the rotor 41, and the valve member 30 that moves relative to the valve port 17 when the rotor 41 rotates. The motor-operated valve control device 70 includes the computer 80, and the computer 80 is configured to determine whether the rotation of the rotor 41 is restricted, by using the information regarding the rising period during which the A-phase current Ia flowing through the A-phase coil 61c changes from the first current value (-It) to the second current value (+It). With this configuration, the motor-operated valve control device 70 can determine whether the rotation of the rotor 41 is restricted even when the A-phase current Ia and the B-phase current Ib are supplied to the A-phase coil 61c and the B-phase coil 62c.

The information regarding the rising period is the rise time from the starting point to the ending point of the rising period, and specifically includes the average value Ta of the rise times (in the first operation example), the variation amount Ba of the rise times (in the second operation example), or both the average value Ta and the variation amount Ba of the rise times (in the third operation example). With this configuration, the motor-operated valve control device 70 can determine whether the rotation of the rotor 41 is restricted, based on information that is relatively easy to obtain.

The motor-operated valve 5 includes the stopper mechanism 49 that restricts the rotation of the rotor 41 in the first direction when the rotor 41 is at the reference position Rx. The computer 80 is configured to determine that the rotation of the rotor 41 in the first direction is restricted by the stopper mechanism 49 (the first-direction rotation restricted state Sr), when the variation amount Ba exceeds the first determination threshold Bh1 while the rotor 41 is rotating in the first direction in the initialization mode (in the third operation example). With this configuration, the motor-operated valve control device 70 can determine the state of the motor-operated valve 5 more finely.

When the variation amount Ba is less than the second determination threshold Bh2 that is less than the first determination threshold Bh1, the motor-operated valve control device 70 is configured to determine that the rotation of the rotor 41 in both the first direction and the second direction is restricted (the rotation locked state Sc) (in the third operation example). With this configuration, the motor-operated valve control device 70 can determine the state of the motor-operated valve 5 more finely.

The driving currents are controlled by the pulse width modulation scheme. The information regarding the rising period is the duty cycle of the pulse width modulation scheme during the determination period E including the rising period (in the fourth operation example). With this configuration, the motor-operated valve control device 70 can also determine whether the rotation of the rotor 41 is restricted even when the A-phase current Ia and the B-phase current Ib are supplied to the A-phase coil 61c and the B-phase coil 62c.

The information regarding the rising period is the waveform of the A-phase current Ia flowing through the A-phase coil 61c during the determination period E including the rising period (in the fifth operation example). With this configuration, the motor-operated valve control device 70 can also determine whether the rotation of the rotor 41 is restricted even when the A-phase current Ia and the B-phase current Ib are supplied to the A-phase coil 61c and the B-phase coil 62c.

In this specification, the terms indicating shapes, such as "circular cylindrical" and "circular columnar", are also used for members and portions of the members substantially having the shapes indicated by the terms. For example, "circular cylindrical member" includes a circular cylindrical member and a substantially circular cylindrical member. Additionally, in this specification, the term "the same" may include strictly the same and substantially the same.

The embodiments of the present invention are described above. The present invention, however, is not limited to these embodiments. Embodiments obtained by a person skilled in the art appropriately adding, removing, or modifying components according to the embodiments described above, and an embodiment obtained by appropriately combining features of the embodiments are included in the scope of the present invention without departing from the spirit of the present invention.

### Reference Signs List

1 ... motor-operated valve device, 5 ... motor-operated valve, 10 ... valve body, 11 ... body member, 13 ... connection member, 14 ... valve chamber, 17 ... valve port, 18 ... valve seat, 20 ... can, 30 ... valve member, 40 ... driving mechanism, 41 ... rotor, 42 ... valve stem holder, 42c ... internal thread, 42s ... movable stopper, 43 ... guide bush, 43c ... external thread, 44 ... stopper member, 44s ... fixed stopper, 49 ... stopper mechanism, 60 ... stator, 61 ... A-phase stack, 61c ... A-phase coil, 62 ... B-phase stack, 62c ... B-phase coil, 66 ... stepping motor, 70 ... motor-operated valve control device, 75 ... non-volatile memory, 76 ... communication device, 77 ... motor driver, 80 ... computer.

## Claims

1. A motor-operated valve control device for controlling a motor-operated valve, the motor-operated valve including a valve body that has a valve port, a rotor, a stator that includes a coil to which a driving current is supplied to rotate the rotor, and a valve member that moves relative to the valve port when the rotor rotates,
the motor-operated valve control device comprising: a processor configured to determine whether rotation of the rotor is restricted, by using information regarding a transition period during which the driving current flowing through the coil changes from a first current value to a second current value.

2. The motor-operated valve control device according to Claim 1, wherein the information regarding the transition period is a time duration from a starting point to an ending point of the transition period.

3. The motor-operated valve control device according to Claim 2, wherein the information regarding the transition period is an average value of time durations, each being the time duration from the starting point to the ending point of the transition period.

4. The motor-operated valve control device according to Claim 2, wherein the information regarding the transition period is a variation amount of time durations, each being the time duration from the starting point to the ending point of the transition period.

5. The motor-operated valve control device according to Claim 4,
wherein the motor-operated valve includes a stopper mechanism that restricts rotation of the rotor in a first direction when the rotor is at a reference position, and
wherein when the variation amount exceeds a first determination threshold while the rotor is rotating in the first direction, the processor is configured to determine that the rotation of the rotor in the first direction is restricted by the stopper mechanism.

6. The motor-operated valve control device according to Claim 5, wherein when the variation amount is less than a second determination threshold that is less than the first determination threshold, the processor is configured to determine that rotation of the rotor in both the first direction and a second direction is restricted.

7. The motor-operated valve control device according to Claim 1,
wherein the driving current is controlled by a pulse width modulation scheme, and
wherein the information regarding the transition period is a duty cycle of the pulse width modulation scheme during a determination period including the transition period.

8. The motor-operated valve control device according to Claim 1, wherein the information regarding the transition period is a waveform of the driving current flowing through the coil during a determination period including the transition period.

9. A motor-operated valve device comprising:
a motor-operated valve; and
the motor-operated valve control device according to any one of Claims 1 to 8.

10. A method for determining a state of a motor-operated valve, the motor-operated valve including a valve body that has a valve port, a rotor, a stator that includes a coil to which a driving current is supplied to rotate the rotor, and a valve member that moves relative to the valve port when the rotor rotates,
the method comprising: determining whether rotation of the rotor is restricted, by using information regarding a transition period during which the driving current flowing through the coil changes from a first current value to a second current value.
